# EUROPÄISCHE PATENTANMELDUNG

(11) **EP 2 105 288 A1**
(43) Veröffentlichungstag der Anmeldung: **30.09.2009**
(21) Anmeldenummer: 08005971.0
(22) Anmeldetag: 28.03.2008
(51) Int. Cl.: B29C 73/16, B29C 73/22, C08L 13/00, C08L 19/00

(54) **Selbstheilendes Elastomersystem**

(71) Anmelder: Carl Freudenberg KG, 69469 Weinheim (DE)
(72) Erfinder: Kritzer, Peter, 67147 Forst (DE); Traber, Boris, 69115 Heidelberg (DE)

(57) **Zusammenfassung**

Gegenstand der Erfindung ist ein selbstheilendes Elastomersystem, enthaltend
a) ein Elastomer, das eine Oberfläche und ein Inneres aufweist, wobei das Elastomer eine Elastomermatrix aufweist, wobei die Elastomermatrix im Inneren kovalent gebundene erste funktionelle Gruppen aufweist, und
b) eine flüssige Phase, die an die Oberfläche des Elastomers angrenzt, wobei die flüssige Phase ein Additiv enthält,

wobei die ersten funktionellen Gruppen und das Additiv so ausgewählt sind, dass im Falle einer Beschädigung des Elastomers erste funktionelle Gruppen, die mit der flüssigen Phase in Kontakt treten, eine Reaktion eingehen. Die Erfindung betrifft auch Verfahren zur Herstellung und Verwendung der selbstheilenden Elastomersysteme und geeignete Elastomere.

## Beschreibung

Gegenstand der Erfindung sind selbstheilende Elastomersysteme und Elastomere, Verfahren zu deren Herstellung und deren Verwendung.

Elastomere Kunststoffe können durch äußere Einflüsse beschädigt werden. Solche Schäden sind insbesondere bei dem Einsatz von Elastomeren als Dichtungen und Beschichtungen problematisch. Die Elastomere können beispielsweise bei Einwirkung erhöhter Temperatur, Druck, mechanischer Belastung, bei Einwirkung von Chemikalien wie Ozon, oder bei äußerer Spannung ihre Struktur in unerwünschter Weise verändern. Dabei können insbesondere Schädigungen der Oberfläche oder Risse entstehen. Das Material ist nach dem Entstehen erster Risse oder Oberflächenschäden oft besonders anfällig für weitere Schäden. So kann sich ein anfänglich feiner Riss bei weiterer Belastung vertiefen und dazu führen, dass das Material insgesamt nicht mehr seine Wirkung erfüllt. Daher müssen bei vielen Anwendungen die Dichtungen oder Beschichtungen häufig überprüft und ausgebessert oder ausgetauscht werden.

Es wurde versucht, diese Probleme durch den Einsatz von "selbstheilenden" Elastomeren zu überwinden.

White et al. (Nature 2001, 409, 794-797) beschreiben ein Verfahren, bei dem die für die Heilung notwendigen Komponenten in die Matrix eingearbeitet sind. Dabei wird eine der Komponenten in "verkapselter Form" dem Elastomer beigemischt ist. Als zweite Komponente ist ein Katalysator in die Polymermatrix eingearbeitet. Bei Schädigung (Rissbildung) öffnen sich die Kapseln, wodurch die heilende Komponente freigesetzt wird. In Gegenwart des Katalysators findet eine Polymerisationsreaktion statt, die zum Verschließen des Risses führen soll.

Die W02007/143475 beschreibt selbstheilende Elastomere, bei denen unterschiedlich befüllte Kapseln in die Matrix eingebettet sind. In ersten Kapseln ist ein polymerisierbares Material enthalten, während in zweiten Kapseln ein Polymerisationsaktivator enthalten ist.

Bei diesen Systemen sind alle Reaktanten, die an der Heilungsreaktion beteiligt sind, in die Matrix eingearbeitet. Solche Systeme weisen den Nachteil auf, das auch bei üblichen Belastungen und normalem Gebrach Mikrokapseln geöffnet werden können und die Heilsubstanz und reaktionsfähige Substanz miteinander reagieren. So sind gerade Dichtungen und Beschichtungen oft erhöhtem Druck und mechanischen Belastungen ausgesetzt. Auch die Herstellung solcher Materialien geht mit mechanischen Belastungen einher, die zur unerwünschten Öffnung von Kapseln und zu einer vorzeitigen Reaktion führen können, beispielsweise beim Mischen in einem Innenmischer, beim Walzen, Extrudieren oder Kalandrieren. Die verkapselten Reaktanden und Katalysatoren müssen während des gesamten Elastomer-Herstellungs-Prozesses stabil bleiben, also während der Mischung, Vulkanisation und dem Nachheizen bei erhöhter Temperatur bis über 180 °C, bei erhöhtem Druck und in Gegenwart von Radikalen. Dadurch ist die Auswahl an Heilsubstanzen bzw. Heilsubstanz-Systemen ("Kapseln") sowie Katalysatorsystemen sehr eingeschränkt. Beispielsweise muss der Siedepunkt der Monomere, die zur Polymerisation gebracht werden sollen und so die "heilende Substanz" erzeugen, über der Vulkanisationstemperatur liegen, da andernfalls die Kapseln aufplatzen.
Zudem müssen diese Kapseln typischer Anwendungszeiten oftmals über mehrere Jahre "überieben", um dann im Bedarfsfall ihre Wirkung noch gezielt entfalten zu können.

Ein weiterer Nachteil der bekannten Systeme ist, dass bei der Verwendung von Kapseln grundsätzlich nicht eine völlig homogene Verteilung der Heilsubstanzen in die Elastomermatrix erfolgen kann. Um eine möglichst homogene Verseilung zu erzielen, müssen die Kapseln besonders klein sein und möglichst viele Kapseln vorhanden sein. Ein hoher Anteil von Kapseln beeinflusst jedoch die Elastomereigenschaften in unerwünschter Weise. Bei der Auswahl kleiner Kapseln wirkt sich nachteilig aus, dass das enthaltene Flüssigkeitsvolumen mit der dritten Potenz des Kapselradius abnimmt. Dies bedeutet, dass bereits eine kleine Verringerung des Kapseldurchmessers mit einer großen Abnahme der Menge der enthaltenen Reaktanten einhergeht

Darüber hinaus ist es bei dem Einsatz von Kapseln wichtig, dass das Kapselmaterial in hohem Maße mit dem Polymermaterial kompatibel ist. Andernfalls wird nicht eine gleichmäßige Verteilung der Kapseln in der Elastomermatrix erhalten, was zu einer Verschlechterung der mechanischen Eigenschaften führen kann. Bei ungleichmäßiger Verteilung können auch Bereiche in dem Material entstehen, für die eine selbstheilende Wirkung nicht gegeben ist.

Die Heilsubstanz wird auch relativ "unspezifisch" freigesetzt, da die freigesetzte Menge immer nur ein Vielfaches des Kapselinhalts sein kann. So kann bei einer kleinen Schädigung des Materials dieselbe Menge an Wirkstoff freigesetzt werden wie bei einer deutlich größeren Schädigung. Es ist auch nicht sichergestellt, dass ein feiner Riss immer auf eine Kapsel trifft und diese öffnet. Der Heilungsmechanismus kann auch nur ein einmaliges Verschließen des Risses bewirken, da keine Substanzen von außen zu der beschädigten Stelle gelangen. Ein weiterer Nachteil ist, dass sowohl die Herstellung solcher gefüllter Kapseln als auch deren Verarbeitung aufwändig und teuer ist.

Der Erfindung liegt die Aufgabe zugrunde, ein selbstheilendes Systems bereitzustellen, das die beschriebenen Nachteile überwindet. Es soll ein selbstheilendes System bereitgestellt werden, das auf einfache hart herstellbar ist und effizient Beschädigungen in Elastomeren heilt.

Das der Erfindung zugrunde liegende Problem wird überraschenderweise gelöst durch ein selbstheilendes Elastomersystem, Elastomere, Verfahren und Verwendungen gemäß den Patentansprüchen.

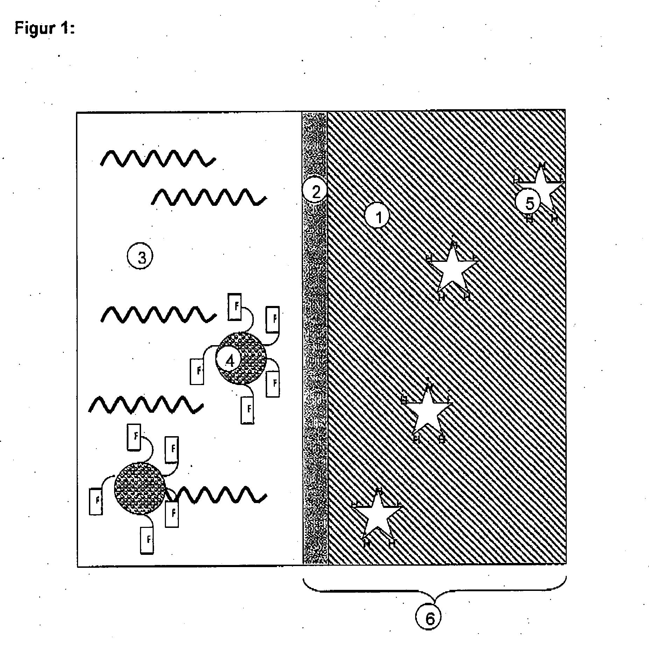

Das erfindungsgemäße selbstheilende Elastomersystem umfasst
a) ein Elastomer, das eine Oberfläche und ein Inneres aufweist, wobei das Elastomer eine Elastomermatrix aufweist, wobei die Elastomermatrix im Inneren spezifische Bereiche kovalent gebundene erste funktionelle Gruppen (H, wie in Figur 1 gekennzeichnet) enthält, sowie optional einem weiteren Katalysator, der die Reaktion beschleunigt, und
b) eine flüssige Phase, die an die Oberfläche des Elastomers angrenzt, wobei die flüssige Phase ein spezielles Additiv enthält, das ebenfalls spezifische funktionelle Gruppen (F, wie in Figur 1 gekennzeichnet) aufweist,
wobei die ersten funktionellen Gruppen H und die des Additives F so ausgewählt sind, dass im Falle einer Beschädigung des Elastomers die ersten funktionelle Gruppen H der Matrix mit denen des Additives F in der flüssigen Phase eine Reaktion eingehen. Diese Reaktion kann neben chemischen Reaktionen auch starke physikalische Bindungen hervorrufen.

Die flüssige Phase grenzt zumindest an eine Oberfläche des Elastomers an. Sie steht unter normalen Bedingungen, also in Abwesenheit einer Beschädigung, im Wesentlichen nicht mit dem Inneren des Elastomers und mit den ersten funktionellen Gruppen H in Kontakt. Bei einer Beschädigung des Elastomers oder einer Trennschicht zwischen dem Elastomer und der flüssigen Phase dringt die flüssige Phase in unerwünschter Weise in das Innere des Elastomers ein und kommt mit den funktionellen Gruppen H in Kontakt.

Das Elastomer umfasst eine Elastomermatrix. Damit wird ein vernetztes Polymergerüst bezeichnet, das elastomere Eigenschaften aufweist. Das Elastomer kann zusätzliche Komponenten enthalten, die nicht Bestandteil der vernetzten Elastomermatrix sind. Das Elastomer kann auch beschichtet sein, beispielsweise mit einer Trennschicht, die die Flüssigkeit von der Elastomermatrix trennt. Eine solche Anordnung wird im Rahmen dieser Anmeldung als "Elastomer" bezeichnet, auch wenn die Trennschicht selbst nicht aus einem elastomeren Material besteht.

Durch die Reaktion der ersten funktionellen Gruppen F wird das Elastomer stabilisiert. Die Reaktion findet im Wesentlichen selektiv an den Stellen an der geschädigten Oberfläche des Elastomers statt, die mit der flüssigen Phase in Kontakt treten. Die Reaktion der ersten funktionellen Gruppen H bewirkt so zumindest teilweise die Selbstheilung des Systems. Sie wird daher erfindungsgemäß auch als "Heitungsreaktion" bezeichnet. Durch die Stabilisierung des geschädigten Elastomers wird der Beschädigung oder einer weiteren Beschädigung entgegenwirkt oder die Beschädigung beseitigt. "Selbstheilend" bedeutet, dass alle Komponenten, die für den Ablauf der Heilungsreaktion erforderlich sind, in dem erfindungsgemäßen System enthalten sind. Die Reaktion kann daher ohne Eingriff von außen stattfinden. Es muss keine Komponente von außen hinzugefügt werden, beispielsweise durch einen Anwender oder ein Gerät. Dadurch wird jedoch erfindungsgemäß nicht ausgeschlossen, dass das System von außen verändert wird. Beispielsweise kann einer flüssigen Phase nach einer besonderen Belastung oder einer Beschädigung das Additiv zugesetzt werden.

Die Beschädigung kann jede Art von Beeinträchtigung der Struktur des Elastomers sein, die bewirkt, dass das Additiv mit den ersten funktionellen Gruppen H in Kontakt tritt. Insbesondere ist dies der Fall, wenn die flüssige Phase mit dem Inneren des Elastomers in Kontakt tritt oder in das Innere des Elastomers eindringt. Dies kann geschehen, wenn in dem Elastomer Risse entstehen oder die Oberfläche abgenutzt oder beschädigt wird. Wenn das Elastomer eine Trennschicht aufweist, kann die Beschädigung auch darin liegen, dass die Trennschicht zerstört wird.

Die Elastomermatrix enthält im Inneren erste funktionelle Gruppen H. Die funktionellen Gruppen können kovalent mit der Elastomermatrix verbunden sein, sie können aber auch als Additiv oder geträgertes Füllstoffmaterial dem Elastomercompound zugesetzt sein.

"Im Inneren" bedeutet, dass das Elastomer die ersten funktionellen Gruppen H an Positionen aufweist, die im unbeschädigten Zustand nicht mit der flüssigen Phase in Kontakt stehen. Dies schließt jedoch nicht aus, dass an der Oberfläche des Elastomers erste reaktive Gruppen H vorhanden sind. In diesem Falle darf die Oberfläche des Elastomers im nicht beschädigten Zustand nicht die flüssige Phase kontaktieren. Das Elastomer kann in diesem Falle eine Trennschicht aufweisen, die die Elastomermatrix von der flüssigen Phase trennt.

Wenn keine Trennschicht vorhanden ist, kann die Oberfläche des Elastomers vorbehandelt werden, so dass funktionelle Gruppen H mit F an der Oberfläche abreagieren. In einer weiteren Ausführungsform der Erfindung enthält die flüssige Phase einen Überschuss des Additivs und reagiert bei Kontaktieren mit dem Elastomer zunächst mit den reaktiven Gruppen der Oberfläche. Es verbleibt ein stabiles selbstheilendes System mit reaktiven Gruppen im Inneren des Elastomers und Additiv in der flüssigen Phase. Die ersten funktionellen Gruppen sind bevorzugt gleichmäßig im Inneren des Elastomers verteilt.

Die Heilungsreaktion der ersten funktionellen Gruppen H des Systems erfolgt entweder untereinander oder mit mindestens einem weiteren Reaktionspartner, dem Additiv aus der Flüssigkeit, der mindestens zweite funktionelle Gruppen F aufweist. Diese Reaktion kann durch einen Katalysator, der der Polymermatix zugesetzt ist, beschleunigt werden. Die Erfindung beruht auf dem Grundprinzip, dass mindestens eine Komponente, die für den Ablauf der Heilungsreaktion erforderlich ist, nicht in dem Elastomer enthalten ist, sondern als Additiv in der flüssigen Phase.

In einer bevorzugten Ausführungsform der Erfindung enthält das System einen Katalysator, der die Reaktion zwischen den ersten funktionellen Gruppen H und den des Additivs F beschleunigt, wobei der Katalysator Teile der Polymermatrix sind, an diese kovalent angehängt sind, nicht kovalent in die Matrix eingebettet sind oder/oder Bestandteile des Additivs sind.

Vorzugsweise enthält das selbstheilende Elastomersystem einen Katalysator, der die Reaktion katalysiert, oder ein Coagens, das die Reaktion fördert. Das Coagens kann beispielsweise ein Reaktionsbeschleuniger oder -initiator sein. Der Katalysator und das Coagens können dabei das Additiv sein, Bestandteil des Additivs sein, zusätzlich in der flüssigen Phase enthalten sein und/oder in dem Elastomer enthalten sein.

In einer Ausführungsform der Erfindung weist das Additiv zweite funktionelle Gruppen F auf, wobei die Reaktion der ersten funktionellen Gruppen H der Elastomermatrix mit den zweiten funktionellen Gruppen des Additivs F erfolgt. Das System kann zusätzlich einen Katalysator oder ein Coagens, das die Reaktion fördert, aufweisen. Diese können in dem Elastomer oder in der flüssigen Phase vorliegen.

Dabei weist jedes Additiv mindestens eine funktionelle Gruppe F auf. Sofern eine einzige funktionelle Gruppe pro Additiv vorliegt, lagern sich die Additive in Folge der Reaktion an das Elastomer an. Es entsteht eine Schicht oder ein Film, wodurch eine weitere Abtragung des Elastomers verhindert wird. Sofern zwei oder mehr funktionelle Gruppen F pro Additiv vorliegen, kann bei der Heilungsreaktion eine Vernetzung stattfinden. Das Additiv kann mindestens zwei verschiedene erste funktionelle Gruppen H der ersten Phase miteinander verbinden.

In einer Ausführungsform der Erfindung ist das Additiv ein polymerisierbares Monomer. Die ersten funktionellen Gruppen der Elastomermatrix sind Anlagerungsstellen zur Polymerisation. Die Elastomermatrix enthält einen Katalysator oder ein Coagens, das die Reaktion fördert, beispielweise einen Reaktionsinitiator oder - beschleuniger.

In einer weiteren Ausführungsform der Erfindung erfolgt die Reaktion der ersten funktionellen Gruppen der Elastomermatrix untereinander, beispielsweise wenn in der Elastomermatrix nicht vernetzte Doppelbindungen enthalten sind. Bei dieser Ausführungsform ist das Additiv bevorzugt ein Katalysator oder ein Coagens, das die Reaktion fördert, beispielweise ein Reaktionsinitiator oder beschleuniger, oder ein Vernetzer.

In einer weiteren Ausführungsform der Erfindung weist die Elastomermatrix zweite funktionelle Gruppen auf, die mit der Elastomermatrix kovalent verbunden sind, wobei die Reaktion der ersten funktionellen Gruppen der Elastomermatrix mit den zweiten funktionellen Gruppen der Elastomermatrix erfolgt. Bei dieser Ausführungsform, ist das Additiv bevorzugt ein Katalysator oder ein Coagens, das die Reaktion fördert, beispielweise ein Reaktionsinitiator oder -beschleuniger, oder ein Vernetzer.

In einer weiteren Ausführungsform der Erfindung sind in der Elastomermatrix Coagentien enthalten, die mit der Matrix nicht kovalent verbunden sind und die zweite funktionelle Gruppen aufweisen, wobei die Reaktion der ersten funktionellen Gruppen der Elastomermatrix mit den zweiten funktionellen Gruppen der Coagentien erfolgt. Bei dieser Ausführungsform ist das Additiv bevorzugt ein Katalysator oder ein Coagens, das die Reaktion fördert, beispielweise ein Reaktionsinitiator oder -beschleuniger.

In einer weiteren Ausführungsform der Erfindung enthält die Elastomermatrix ein polymerisierbares Monomer. Die ersten funktionellen Gruppen der Elastomermatrix sind Anlagerungsstellen zur Polymerisation. Das Additiv ist ein Katalysator oder ein Coagens, das die Reaktion fördert, beispielweise einen Reaktionsinitiator oder -beschleuniger.

Die Reaktion der ersten funktionellen Gruppen der Elastomermatrix kann eine chemische oder eine physikalische Reaktion sein. Bei einer chemischen Reaktion werden kovalente Bindungen ausgebildet. Die funktionellen Gruppen gehen eine Interaktion untereinander oder mit weiteren funktionellen Gruppen ein, die zu einer Stabilisierung des Elastomers an der beschädigten Stelle führt. Die Reaktion kann die Ausbildung kovalenter Bindungen oder die Ausbildung nicht kovalenter Wechselwirkung sein, ausgewählt aus van der Waals, magnetischen, elektrostatischen, ionischen, hydrophoben, dipolaren oder sonstigen Wechselwirkungen.

In weiteren Ausführungsformen der Erfindung sind die funktionellen Gruppen und das Additiv jeweils magnetisch und/oder jeweils ionisch und weisen eine Affinität zueinander auf. Bei der Verwendung magnetischer Wechselwirkungen ist vorzugsweise zwischen der flüssigen Phase und dem Elastomer eine Trennschicht aus einem Material vorhanden, das die magnetischen Wechselwirkungen abschirmt. Sobald die Trennschicht beschädigt und das Elastomer freilegt wird, können sich magnetische Partikel aus der flüssigen Phase anlagern und die Oberfläche versiegeln.

In einer Ausführungsform der Erfindung liegen in der Elastomermatrix permanentmagnetische Partikel und in der flüssigen Phase ein magnetisches, aber nicht-permanent-magnetisches Pulver vor, wobei das Pulver frei oder umhüllt von Elastomer oder Polymeren sein kann und wobei die durchschnittliche Partikelgröße des Pulvers unterhalb 1 µm liegt.

In der Tabelle 1 sind beispielhafte Ausführungsformen der Erfindung dargestellt.

**Tabelle 1: Selbstheilungs-Konzepte**

| Elastomer | Flüssige Phase | Art der Reaktion | Zusammenhaltende Kraft |
|---|---|---|---|
| Zwei verschiedene funktionelle Gruppen A und B | Katalysator | Katalysator löst Reaktion von A mit B aus, bei der kovalente Bindung entsteht | kovalente Bindung |
| Funktionelle Gruppe A und Katalysator | Funktionelle Gruppe B | Katalysator löst Reaktion von A mit B aus, bei der kovalente Bindung entsteht | kovalent Bindung |
| Funktionelle Gruppen sind unvernetzte Elastomer-Anteile | Vernetzer | Nachvernetzung "bei Bedarf" | kovalente Bindung |
| Funktionelle Gruppen sind nicht chemisch reaktiv, aber haftend | haftend auf Matrix | Heilsubstanz bildet Haftfilm auf Matrix und verhindert so weiteres Einreißen | Dipol-/ van der Waals-, magnetische oder elektrostatische Wechselwirkung |

Geeignete chemische Reaktionen sind beispielsweise Polymerisation, Kondensation, Metathese-Reaktion, Dials-Alder-Reaktion, Allyl-Addition und radikalische Addition. Die funktionellen Gruppen sind beispielsweise ausgewählt aus Vinyl-, Dien-, Amin-, Alkoxysiloxan-, Carboxyl-, Hydroxy-, Urethan-, Isocyanat-, Siloxan-, Ester-, Amid- und Thiolgruppen.

In der Tabelle 2 ist gezeigt, wie die erste funktionelle Gruppe der Elastomermatrix H und die zweite funktionelle Gruppe des Additivs F ausgewählt sein können, um eine chemische Reaktion zwischen dem Elastomer und dem Additiv zu erhalten.

**Tabelle 2: Selbstheilungs-Konzepte durch Reaktionen mit dem Additiv.**

| Erste funktionelle Gruppen des Elastomers H | Zweite funktionelle Gruppen des Additivs in der flüssigen Phase F | Katalysator oder Coagens | Mechanismus der Reaktion |
|---|---|---|---|
| C=C R-S-S-R | S-H | möglich | Addition |
| C=C | Dien-Bindung | ggf. Cu-Kat. oder ähnlich | Diels-Alder |
| C=C | C=C | WCl₆ | Metathese |
| Polyuretan, Carbonsäure oder Siloxan-Si(OEt)3 | -OH | Ti-Kat., DMAP | Kondensation |
| Ester öder Amid | -COOH | möglich | Kondensation |
| ionisch | ionisch | - | Salzbildung |

Die Reaktion ist vorzugsweise eine Vernetzungsreaktion. Voraussetzung für eine Vernetzungsreaktion ist, dass Reaktanden (Vernetzer) vorliegen, die in einem Molekül oder auf einem Partikel mindestens zwei reaktive Gruppen F aufweisen. In einer bevorzugten Ausführungsform dienen die Additive als Vernetzer.

Besonders bevorzugt ist der Einsatz von Partikeln, die eine Vielzahl von zweiten funktionellen Gruppen F aufweisen, als Additive. Die Partikel können so fest an das Elastomer gebunden werden und durch Brückenwirkung ein Risswachstum verhindern.

Das Elastomer kann aus bekannten Kautschuken bestehen, wie Ethylen-Propylen-Dien-Kautschuk (EPDM-Kautschuk). EPDM-Kautschuk weist eine hohe Elastizität und eine gute chemische Beständigkeit insbesondere gegenüber polaren organischen Medien auf und ist über einen breiten Temperaturbereich einsetzbar. Es können auch Kautschuke eingesetzt werden, ausgewählt aus Naturkautschuk, Isopren-Kautschuk, Butadien-Kautschuk, Chloropren-Kautschuk, Styrol-Butadien-Kautschuk oder hydrogenierter Nitril-Butadien-Kautschuk (HNBR). Dabei können Homopolymere, Copolymere oder Blockcopolymere eingesetzt werden. Es sind auch fluorierte oder chlorierte Kautschuke einsetzbar, wie Perfluorkautschuk (FFKM), Fluor-Kautschuk (FKM) oder Propylen-Tetrafluorethylen-Kautschuk (PTFE), sowie Copolymere davon. Das Elastomer kann übliche Zusatzstoffe enthalten, wie Farbstoffe, Füllstoff, Weichmacher, Antistatika, Antioxidantien sowie kautschukspezifische Vemetzungschemikalien.

In einer bevorzugten Ausführungsform besteht das Additiv aus Partikeln, die die zweiten funktionellen Gruppen F an der Oberfläche enthalten. Dabei können die Partikel aus einem Trägermaterial bestehen, an dessen Oberfläche die zweiten funktionellen Gruppen F aufgebracht sind. Als Trägermaterial kommt ein elastomeres Material in Betracht. Geeignet sind beispielsweise elastomere Partikel, die OH-Gruppen an der Oberfläche aufweisen (Micromorph™, RheinChemie, Rheinau). Weitere geeignete Trägermaterialien sind beispielsweise funktionalisierte Ruße, Graphite, Kohlenstoff-Fasern, Carbon Nanotubes, Kieselsäuren, Aluminiumsilicate und mineralische Füllstoffe. Der Einsatz von Partikeln ist vorteilhaft, da diese die Risse füllen können. Die Größe der Partikel wird so ausgewählt, dass sie in der Lage sind, in Risse zu diffundieren bzw. zu migrieren und die Risse durch die Reaktion zu schließen (oder die Risswände "zusammenzukleistern"). Als Trägermaterial können beispielsweise Elastomer-Partikel, Thermoplast-Partikel, Kohlenstoff in Partikel-, Faser-oder Hohlfaserform, oder andere anorganische Materialien wie Silica eingesetzt werden, die gegebenenfalls funktionalisiert sind. Das mittlere Teilchendurchmesser der Partikel kann <5, <3 oder <1 µm liegen. In bevorzugten Ausführungsformen ist das mittlere Teilchendurchmesser der Partikel 10 nm bis 10 µm, insbesondere zwischen 30 nm und 5 µm oder zwischen 100 nm und 3 µm. Vorzugsweise ist die durchschnittliche Abmessung in mindestens zwei Dimensionen unterhalb 1 µm.

In einer bevorzugten Ausführungsform der Erfindung enthält die flüssige Phase vernetzbare Additive mit zweiten funktionellen Gruppen F, und die Elastomermatrix enthält Katalysatoren und/oder Reaktionsinitiatoren oder -beschleuniger. Diese können in der Matrix in reiner oder auch in geträgerter Form vorliegen. Liegen sie in geträgerter Form vor, so können sie auf gefällten oder pyrogenen Kieselsäuren oder Rußen in das Elastomer eingearbeitet sein.

Dieser Katalysator oder Reaktionsinitiator oder -beschleuniger kann eine Reaktion der ersten funktionellen Gruppen H der Elastomermatrix mit dem Additiv fördern oder auslösen. So können Doppelbindungen des Additivs mit der Elastomermatrix oder mit speziell in das Elastomer eingebrachten reaktiven Gruppen reagieren. Die Elastomermatrix kann beispielsweise mit Carbonsäuregruppen (in carboxyliertem Nitril-Butadien-Kautschuk, XNBR) derivatisiert sein: Geeignet sind auch Isocyanatgruppen oder spezielle Vernetzungsstellen wie Halogenalkangruppen (-CH₂Cl oder-CH₂Br) in Flourkarbon-Kautschuk (FKM) oder Polyethylacrylat (ACM). Es ist auch möglich, dass das Elastomer nicht kovalent an die Matrix gebundene funktionelle Gruppe enthält, beispielsweise in Form von kurzkettigen Polymeren (Nipol™, Zeon Chemicals oder Hycar™, Lubrizol Corp.). Die ersten funktionellen Gruppen können durch chemische Reaktionen an die Elastomermatrix angehängt sein. Es kann auch ein Füllstoff mit ersten reaktiven Gruppen an der Oberfläche in die Elastomermatrix eingearbeitet sein. Dieser lässt sich beispielsweise während der Vulkanisation in die Elastomermatrix einbinden.

In einer bevorzugten Ausführungsform weist das System zusätzlich eine Trennschicht auf, die zwischen dem Elastomer und der flüssigen Phase positioniert ist. In diesem Falle kontaktiert die flüssige Phase im Normalzustand nicht direkt das Elastomer, sondern die Trennschicht. Die Trennschicht kann porös sein, sofern die Porengröße so klein ist, dass das Additiv nicht zu dem Elastomer diffundieren kann. Bei einer Schädigung,der Trennschicht wird zumindest zum Teil das darunter liegende Elastomer mit den ersten funktionellen Gruppen H freigesetzt und gerät in Kontakt mit dem Additiv. Die Trennschicht besteht beispielsweise aus einem Elastomer. Es kann das gleiche Elastomer eingesetzt werden wie in der reaktiven Elastomerkomponente, sofern eine Komponente, die zur Heilungsreaktion erforderlich ist, fehlt. Wenn beispielsweise die Reaktion einen in der Elastomermatrix eingebetteten Katalysator erfordert, so kann als Trennschicht das gleiche Elastomer wie in der reaktiven Elastomerphase ohne eingebetteten Katalysator verwendet werden. Geeignet ist auch ein Schutzlack, z.B. ein Gleitlack.

In einer Ausführungsform der Erfindung enthält das Elastomer zusätzlich ein Coagens, das nicht kovalent mit der Elastomermatrix verbunden ist und das an der Interaktion der funktionellen Gruppen der Elastomermatrix und des Additivs beteiligt ist. Das Coagens kann beispielsweise ein Katalysator, ein Reaktionsinitiator, ein Reaktionsbeschleuniger oder ein Vernetzer sein. Die flüssige Phase kann beispielsweise eine wässrige Phase oder eine Ölphase, beispielsweise ein Schmiermittel, sein. Sie kann aber auch sonstige flüssige Komponenten enthalten oder daraus bestehen, wie Alkohole. Die flüssige Phase kann neben den Additiven, die die Heilungsreaktion unterstützen, weitere übliche Zusätze enthalten, wie gelöste Ionen.
Die Figur 1 zeigt schematisch und beispielhaft ein erfindungsgemäßes selbstheilendes Elastomersystem im nicht beschädigten Zustand.
Die Figur 2 zeigt schematisch und beispielhaft die Selbstheilungsreaktion eines erfindungsgemäßen Elastomersystems, bei dem in dem Elastomer ein Riss entstanden ist.
Die Figur 3 zeigt schematisch und beispielhaft die erfindungsgemäße Selbstheilung eines Elastomers bei Beschädigung einer Trennschicht.

Die Figur 1 zeigt ein erfindungsgemäßes selbstheilendes Elastomersystem im nicht beschädigten Zustand. Das System enthält ein Elastomer (6) mit einem vernetzten Kautschuk (1). Eine Trennschicht (2) trennt die flüssige Phase (3), die das Additiv (4) enthält, von den funktionellen Gruppen F in dem Elastomer. Die Trennschicht (2) wird durch nachträgliches Beschichten des Werkstoffes aufgebracht. Die Trennschicht (2) ist so beschaffen, dass sie nicht mit dem flüssigen Medium (3) und den funktionellen Gruppen (5) H reagieren kann und außerdem gut an das Elastomer haftet Die Elastomermatrix (1) beinhaltet funktionelle Gruppen (5) H und kann mit den funktionellen Gruppen F des Additiv (4) oder in dessen Gegenwart eine chemische oder physikalische Reaktion eingehen. Das Additiv (4), das dem flüssigen Medium zugegeben wird, besteht in Figur 1 aus Partikeln aus einem Trägermaterial und zweiten funktionellen Gruppen (F) auf dessen Oberfläche.

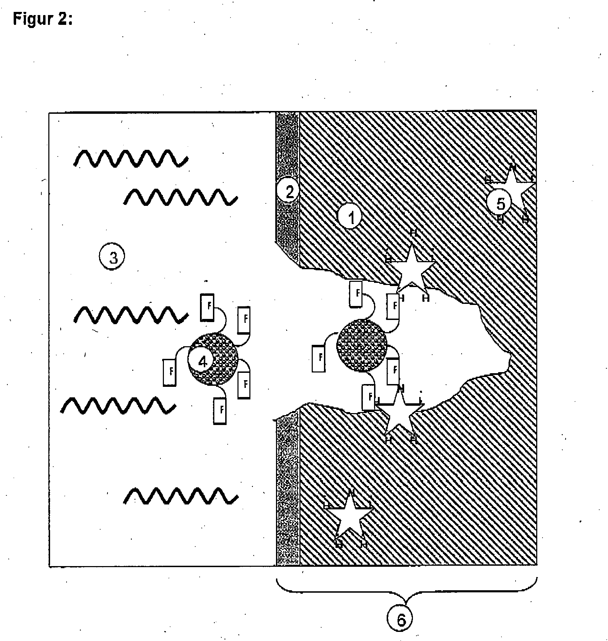

Die Figur 2 zeigt die Selbstheilungsreaktion eines erfindungsgemäßen Elastomersystems, bei dem in dem Elastomer (6) ein Riss entstanden ist. Der Riss geht durch die Trennschicht (2) hindurch, so dass die flüssige Phase (3) in Kontakt mit dem Inneren des Elastomers tritt. Das lösliche Additiv liegt in Form von Partikeln vor, bei denen zweite reaktive Gruppen (F) an ein Trägermaterial (4) gebunden sind. Die löslichen Additive diffundieren in den Riss und reagieren dort über die zweiten funktionellen Gruppen (F) mit den ersten funktionellen Gruppen H (5) des Elastomers. Dadurch werden die Partikel in dem Riss fixiert, wodurch das Elastomer stabilisiert wird und das Risswachstum gestoppt wird. Vorzugsweise findet bei der Reaktion eine Vernetzung statt, bei der zwischen einem Additiv und der Elastomermatrix mehrere Bindungen ausgebildet werden.

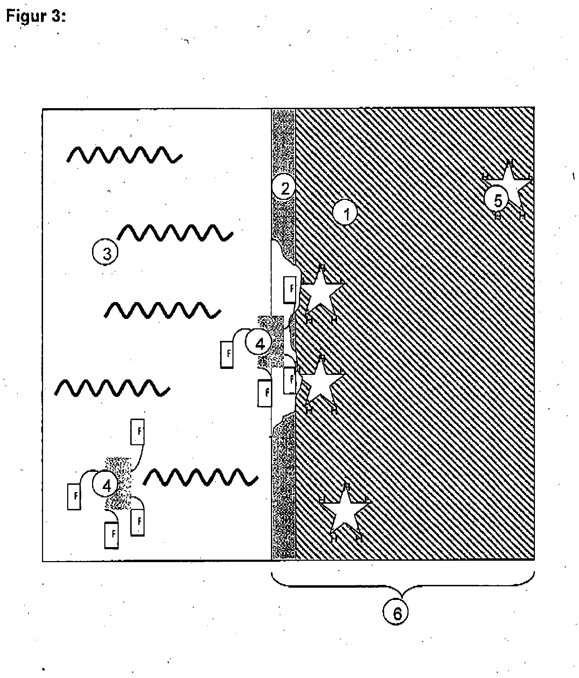

Die Figur 3 zeigt beispielhaft eine erfindungsgemäße Selbstheilung eines Elastomers (6) bei Beschädigung einer Trennschicht (2). In der flüssigen Phase sind monomere Additive (3) enthalten, die aus denselben Bausteinen bestehen wie die polymere Trennschicht (2). Zusätzlich enthält die flüssige Phase Partikel (4) mit funktionellen Gruppen F. Wird die Trennschicht beschädigt, beispielsweise durch Abrieb, dann kommen die funktionellen Gruppen der Elastomermatrix mit den monomeren Additiven (3) der flüssigen Phase in Kontakt. Die monomeren Additive (3) reagieren mit funktionellen Gruppen H der Polymermatrix, z.B. mit Doppelbindungen. Gegebenenfalls wird die Reaktion durch Katalysatoren in dem Elastomer unterstützt. Durch diese Reaktion wird die offene Stelle geschlossen und die Trennschicht (2) regeneriert.

Das erfindungsgemäße Elastomer, das gegebenenfalls die Trennschicht aufweist, bildet einen Formköper. Der Formkörper ist bevorzugt eine Dichtung oder eine Beschichtung. Dichtungen und Beschichtungen stehen häufig in Kontakt mit Flüssigkeiten und sind anfällig für Beschädigungen wie Risse und Oberflächenschäden. Solche Schäden sind oft nur schwer oder umständlich zu erkennen und können bewirken, dass die Dichtungen oder Beschichtungen ihre Aufgaben nicht mehr erfüllen und dass Folgeschäden entstehen. Bevorzugt ist das Elastomer ein Dichtungsring, beispielsweise ein Radialwelleridichtring oder O-Ring.

Gegenstand der Erfindung ist auch ein Elastomer, das eine Oberfläche und ein Inneres aufweist, wobei das Elastomer eine Elastomermatrix aufweist, wobei die Elastomermatrix im Inneren kovalent gebundene erste funktionelle Gruppen H aufweist, und das Elastomer an der Oberfläche im wesentlichen keine kovalent gebundenen ersten funktionelle Gruppen H aufweist, wobei
(a) die Elastomermatrix zweite funktionelle Gruppen aufweist, die Bestandteile der Elastomermatrix sind oder an diese angehängt sind und/oder
(b) wobei nicht kovalent verbunden in der Elastomermatrix Coagentien, die zweite funktionelle Gruppen aufweisen, Katalysatoren, Reaktionsinitiatoren, Reaktionsbeschleuniger und/oder Vernetzer enthalten sind,
wobei die zweiten funktionellen Gruppen, die Katalysatoren, die Reaktionsinitiatoren, Reaktionsbeschleuniger und/oder die Vernetzer so ausgewählt sind, dass sie eine Reaktion mit den ersten funktionellen Gruppen H eingehen oder katalysieren oder initiieren, wenn eine weitere Komponente in das Elastomer eindringt.

In einer bevorzugten Ausführungsform sind die ersten funktionellen Gruppen Carboxylgruppen, und in der Elastomermatrix ist ein Katalysator für eine Veresterung enthalten. Das Elastomer kann eine Trennschicht aufweisen.

Gegenstand der Erfindung ist auch die Verwendung des erfindungsgemäßen Systems oder des Elastomers zur Heilung von Beschädigungen von Elastomeren.

Gegenstand der Erfindung ist auch ein Verfahren zur Herstellung eines selbstheilenden Elastomersystems oder zur Heilung von Beschädigungen eines Elastomers, wobei
(a) ein Elastomer bereitgestellt wird, das eine Oberfläche und ein Inneres aufweist, wobei das Elastomer eine Elastomermatrix aufweist, wobei die Elastomermatrix im Inneren kovalent gebundene erste funktionelle Gruppen aufweist, und
(b) eine flüssige Phase hinzugegeben wird, die an die Oberfläche des Elastomers angrenzt, wobei die flüssige Phase ein Additiv enthält,
wobei die ersten funktionellen Gruppen und das Additiv so ausgewählt sind, dass im Falle einer Beschädigung des Elastomers erste funktionelle Gruppen, die mit der flüssigen Phase in Kontakt treten, eine Realtion eingehen.

Gegenstand der Erfindung ist auch ein Verfahren zur Herstellung eines selbstheilenden Elastomersystems oder zur Heilung von Beschädigungen eines Elastomer, wobei das Elastomersystem
(a) ein Elastomer, das eine Oberfläche und ein Inneres aufweist, wobei das Elastomer eine Elastomermatrix aufweist, wobei die Elastomermatrix im Inneren kovalent gebundene erste funktionelle Gruppen aufweist, und
(b) eine flüssige Phase, die an die Oberfläche des Elastomers angrenzt, aufweist,
dadurch gekennzeichnet, dass der flüssigen Phase ein Additiv zugesetzt wird, wobei die ersten funktionellen Gruppen und das Additiv so ausgewählt sind, dass im Falle einer Beschädigung des Elastomeres erste funktionelle Gruppen, die mit der flüssigen Phase in Kontakt treten, eine Reaktion eingehen.

Das erfindungsgemäße System ist selbstheilend. Dies schließt jedoch nicht aus, dass das System von außen verändert wird. So ist es erfindungsgemäß möglich, insbesondere die Zusammensetzung der flüssigen Phase im Hinblick auf bestimmte Anforderungen oder äußere Umstände anzupassen. Beispielsweise kann das Additiv der flüssigen Phase intervallweise zugegeben werden, um einen Verbrauch zu kompensieren. Das Additiv kann auch erst bei Bedarf in einer gewünschten Konzentration zugegeben werden. Dies kann beispielsweise sinnvoll sein, wenn feststeht oder es möglich ist; dass das Elastomer beschädigt ist, beispielsweise wegen einer erhöhten mechanischen oder Temperaturbelastung. Es kann auch routinemäßig getestet werden, ob in der flüssigen Phase noch genügend reaktives Additiv vorhanden ist. Bei Bedarf wird dann das Additiv erneut zugesetzt, oder ausgetauscht, oder die gesamte flüssige Phase mit dem Additiv wird ausgetauscht.

Das erfindungsgemäße System weist gegenüber bekannten Systemen zahlreiche Vorteile auf. Bei dem erfindungsgemäßen System wird eine Reaktion ausgelöst, sobald die flüssige Phase in das Innere des Elastomers eindringt. Es ist nicht erst erforderlich, dass durch eine mechanische Mindestbelastung eine Kapsel aufreißt. So kann dem Risswachstum erfindungsgemäß bereits in einem frühen Stadium der Rissbildung entgegengewirkt werden.

Die Erfindung ermöglicht eine hohe Selektivität der Heilungsreaktion durch die vollständige räumliche Trennung einer Komponente der Heilungsreaktion des Elastomers. Das System reagiert effektiv an der Stelle, wo der Schaden entstanden ist. Ein Riss kann teilweise oder vollständig geschlossen werden. Es erfolgt keine unspezifische Reaktion an anderen Stellen in dem Elastomer. Bei bekannten Systemen mit Kapseln können unspezifische Reaktionen durch die Beschädigung von Kapseln ausgelöst werden. Erfindungsgemäß ist es dagegen ausgeschlossen, dass eine Reaktion an einer Stelle des Elastomers einsetzt, an der die flüssige Phase nicht in das Innere des Elastomers eindringt.

Der Heilungsmechanismus verläuft über die Interaktion einer mobilen Komponente aus dem flüssigen Medium mit einer immobilen Komponente des Kautschuks. Bei dem erfindungsgemäßen Einsatz von Partikeln als lösliche Additive ist zur Heilung von Schäden nicht eine vollständige Polymerisationsreaktion notwendig, sondern nur die Reaktion an bestimmten Kontaktpunkten. Die Partikel füllen dann Risse aus oder decken die beschädigte Oberfläche des Elastomers ab. Die Erfindung ermöglicht das Einsetzen der Heilungsreaktion unmittelbar bei Eintritt der Beschädigung am Ort der Beschädigung. Das Additiv kann seine Wirkung unmittelbar am Ort des Schadens entfalten. Eine unerwünschte Reaktion findet weder innerhalb des Elastomers noch in der flüssigen Phase statt. So erfolgt weder eine Beeinträchtigung der Elastomerphase durch Unregelmäßigkeiten noch eine Klumpenbildung in der flüssigen Phase. Bei Rissen kann eine Vernetzung von unterschiedlichen Stellen an der Rissoberfläche stattfinden. Dieser "Brückeneffekt" durch Ausbildung einer molekularen Klammer verhindert die weitere Rissausbreitung.

### Ausführungsbeispiel:

### Zusammensetzung eineserfindungsgemäßen Elastomersystems für einen Radialwellendichtring in einem Schmieröl.

Das Elastomer ist wie in der Tabelle 3 angegeben zusammengesetzt. Die Beispiele 1 und 2 sind erfindungsgemäß. Die Kontrollzusammensetzung (Spalte links) enthält keinen Katalysator, so dass die Heilungsreaktion nicht stattfindet.

**Tabelle 3: Zusammensetzungen des Elastomers:**

| | Kontrolle | Nr.1 | Nr.2 |
|---|---|---|---|
| Krynac 740 ¹⁾ | 100 phr | 100 phr | 100 phr |
| Ruß N 550 | 30 phr | 30 phr | 30 phr |
| Dusantox IPPD ²⁾ | 2 phr | 2 phr | 2 phr |
| Stearinsäure | 2 phr | 2 phr | 2 phr |
| Wingstay 29 ³⁾ | 1 phr | 1 phr | 1 phr |
| ZnO₂ (70 %) ⁴⁾ | 7 phr | 7 phr | 7 phr |
| ZBEC-70 ⁴⁾ | 2 phr | 2 phr | 2 phr |
| CLD ⁴⁾ | 1,5 phr | 1,5 phr | 1,5 phr |
| Schwefel | 2 phr | 2 phr | 2 phr |
| DMAP ⁵⁾ | | 3 phr | 5 phr |

| | | | |
|---|---|---|---|
| 1) Carboxyliertes Butadien-Acrylonitril Terpolymer von Lanxess 2) Stabilisator, Antioxidans 3) Antioxidans 4) Vulkanisationsbeschleuniger 5) Vernetzungskatalysator der Selbstheilung | | | |

Als Schmieröl für die Radialwellendichtringe wird als Standard GE M1-220 N (Klüber Lubrications, München) auf Mineralölbasis verwendet. Diesem werden als Additiv 15 Gew-% Micromorph 20 zugesetzt.

## Patentansprüche

1. Selbstheilendes Elastomersystem, enthaltend
(a) ein Elastomer, das eine Oberfläche und ein Inneres aufweist, wobei das Elastomer eine Elastomermatrix aufweist, wobei die Elastomermatrix im inneren kovalent gebundene erste funktionelle Gruppen aufweist, und
(b) eine flüssige Phase, die an die Oberfläche des Elastomers angrenzt, wobei die flüssige Phase ein Additiv enthält,
wobei die ersten funktionellen Gruppen und das Additiv so ausgewählt sind, dass im Falle einer Beschädigung des Elastomers erste funktionelle Gruppen, die mit der flüssigen Phase in Kontakt treten, eine Reaktion eingehen.

2. Elastomersystem nach Anspruch 1, wobei die durch die Reaktion das Elastomer stabilisiert wird.

3. Elastomersystem nach Anspruch 1 oder 2, wobei das System zweite funktionelle Gruppen enthält, die mit den ersten funktionellen Gruppen reagieren können, wobei die zweiten funktionellen Gruppen Bestandteile der Elastomermatrix sind, an diese angehängt sind, nicht kovalent verbunden in die Matrix eingebettet sind oder/oder Bestandteile des Additivs sind.

4. Elastomersystem nach einem der vorhergehenden Ansprüche, wobei das System einen Katalysator, Reaktionsbeschleuniger und/oder Reaktionsinitiator enthält.

5. Elastomersystem nach einem der Ansprüche 1 bis 4, wobei das Additiv zweite funktionelle Gruppen aufweist, wobei die Reaktion der ersten funktionellen Gruppen der Elastomermatrix mit den zweiten funktionellen Gruppen des Additivs erfolgt.

6. Elastomersystem nach einem der Ansprüche 1 bis 4, wobei die Reaktion der ersten funktionellen Gruppen untereinander erfolgt.

7. Elastomersystem nach einem der Ansprüche 1 bis 4, wobei die Elastomermatrix zweite funktionelle Gruppen aufweist, die mit der Elastomermatrix kovalent verbunden sind, wobei die Reaktion der ersten funktionellen Gruppen der Elastomermatrix mit den zweiten funktionellen Gruppen erfolgt.

8. Elastomersystem nach einem der Ansprüche 1 bis 4, wobei in der Elastomermatrix Coagentien enthalten sind, die mit der Matrix nicht kovalent verbunden sind und die zweite funktionelle Gruppen aufweisen, wobei die Reaktion der ersten funktionellen Gruppen der Elastomermatrix mit den zweiten funktionellen Gruppen der Coagentien erfolgt.

9. Elastomersystem nach einem der vorhergehenden Ansprüche, wobei die Reaktion die Ausbildung kovalenter Bindungen oder die Ausbildung nicht kovalenter Wechselwirkung ist, ausgewählt aus van der Waals, magnetischen, elektrostatischen, ionischen, hydrophoben, dipolaren oder sonstigen Wechselwirkungen.

10. Elastomersystem nach einem der vorhergehenden Ansprüche, wobei die Reaktion eine Vernetzungsreaktion ist.

11. Elastomersystem nach Anspruch 10, wobei die vernetzbaren Gruppen ausgewählt sind aus Vinyl-, Dien-, Amin-, Alkoxysiloxan-, Carboxyl-, Hydroxy-, Urethan-, Isocyanat, Siloxan-, Ester-, Amid-und Thiolgruppen.

12. Elastomersystem nach einem der vorhergehenden Ansprüche, wobei das Additiv aus Partikeln besteht, die an der Oberfläche zweite funktionelle Gruppen enthalten.

13. Elastomersystem nach einem der vorhergehenden Ansprüche, wobei die funktionellen Gruppen und das Additiv jeweils magnetisch und/oder jeweils ionisch sind und eine Affinität zueinander aufweisen.

14. Elastomersystem nach einem der vorhergehenden Ansprüche, wobei das Elastomer zusätzlich eine Trennschicht aufweist, die zwischen der Elastomermatrix und der flüssigen Phase angeordnet ist.

15. Elastomer, das eine Oberfläche und ein Inneres aufweist, wobei das Elastomer eine Elastomermatrix aufweist, wobei die Elastomermatrix im Inneren kovalent gebundene erste funktionelle Gruppen aufweist, und das Elastomer an der Oberfläche im wesentlichen keine kovalent gebundenen ersten funktionelle Gruppen aufweist, wobei
(a) die Elastomermatrix zweite funktionelle Gruppen aufweist, die Bestandteile der Elastomermatrix sind oder an diese angehängt sind und/oder r
(b) nicht kovalent verbunden in der Elastomermatrix Coagentien, die zweite funktionelle Gruppen aufweisen, Katalysatoren, Reaktionsinitiatoren, Reaktionsbeschleuniger und/oder Vernetzer enthalten sind,
wobei die zweiten funktionellen Gruppen, die Katalysatoren, die Reaktionsinitiatoren, Reaktionsbeschleuniger und/oder die Vernetzer so ausgewählt sind, dass sie eine Reaktion mit den ersten funktionellen Gruppen eingehen oder katalysieren oder initiieren, wenn eine weitere Komponente in das Elastomer eindringt.

16. Selbstheilendes Elastomer nach Anspruch 15, **dadurch gekennzeichnet, dass** die ersten funktionellen Gruppen Carboxylgruppen sind und das in der Elastomermatrix ein Katalysator für eine Veresterung enthalten ist.

17. Selbstheilendes Elastomer nach Anspruch 15 oder 16, **dadurch gekennzeichnet, dass** es eine Trennschicht aufweist.

18. Verwendung eines Systems gemäß den Ansprüchen 1 bis 15 oder eines Elastomers nach Anspruch 15, 16 oder 17 zur Heilung von Beschädigungen von Elastomeren.

19. Verfahren zur Herstellung eines selbstheilenden Elastomersystems oder zur Heilung von Beschädigungen eines Elastomers, wobei
(a) ein Elastomer bereitgestellt wird, das eine Oberfläche und ein Inneres aufweist, wobei das Elastomer eine Elastomermatrix aufweist, wobei die Elastomermatrix im Inneren kovalent gebundene erste funktionelle Gruppen aufweist, und
(b) eine flüssige Phase hinzugegeben wird, die an die Oberfläche des Elastomers angrenzt, wobei die flüssige Phase ein Additiv enthält,
wobei die ersten funktionellen Gruppen und das Additiv so ausgewählt sind, dass im Falle einer Beschädigung des Elastomers erste funktionelle Gruppen, die mit der flüssigen Phase in Kontakt treten, eine Reaktion eingehen.

20. Verfahren zur Herstellung eines selbstheilenden Elastomersystems oder zur Heilung von Beschädigungen eines Elastomers, wobei das Elastomersystem
(a) ein Elastomer, das eine Oberfläche und ein Inneres aufweist, wobei das Elastomer eine Elastomermatrix aufweist, wobei die Elastomermatrix im Inneren kovalent gebundene erste funktionelle Gruppen aufweist, und
(b) eine flüssige Phase, die an die Oberfläche des Elastomers angrenzt, aufweist,
**dadurch gekennzeichnet, dass** der flüssigen Phase ein Additiv zugesetzt wird, wobei die ersten funktionellen Gruppen und das Additiv so ausgewählt sind, dass im Falle einer Beschädigung des Elastomers erste funktionelle Gruppen, die mit der flüssigen Phase in Kontakt treten, eine Reaktion eingehen.

21. Verwendung eines nach einem der vorherigen Ansprüchen beschriebenen Elastomer-Systems für Dichtungen, Membranen, Bälge, Formteile, Gummi-Metall-Teile, Buchsen oder Hydrolager.
